# EUROPEAN PATENT SPECIFICATION

(11) **EP 3 011 329 B1**
(45) Date of publication and mention of the grant of the patent: **15.03.2023**
(21) Application number: 14727815.4
(22) Date of filing: 02.06.2014
(51) Int. Cl.: G01N 29/22, G01N 29/24, G01N 29/34, G01N 29/02, F01N 3/20, G01F 23/296

(54) **A VEHICLE UREA TANK ASSOCIATED WITH A SENSING CHAMBER FOR ACOUSTIC QUALITY AND LEVEL SENSING**
FAHRZEUGHARNSTOFFTANK IN VERBINDUNG MIT EINER MESSKAMMER ZUR AKUSTISCHEN QUALITÄTS- UND FÜLLSTANDSKONTROLLE
RÉSERVOIR D'URÉE DE VÉHICULE ASSOCIÉ À UNE CHAMBRE DE DÉTECTION POUR LE CONTRÔLE ACOUSTIQUE DE QUALITÉ ET DE NIVEAU DE REMPLISSAGE

(30) Priority: 18.06.2013 US 201361836492 P; 16.09.2013 EP 13184643
(43) Date of publication of application: 27.04.2016
(73) Proprietor: Plastic Omnium Advanced Innovation and Research, 1130 Bruxelles (BE)
(72) Inventor: OP DE BEECK, Joel, B-2547 Lint (BE); THOMPSON, James Edward, Novi, Michigan 48375 (US)
(74) Representative: LLR
(86) International application number: PCT/EP2014/061358
(87) International publication number: WO 2014/202374

(56) References cited:
- DE-A1-102007 059 853
- DE-A1-102009 055 716
- GB-A- 2 476 317

## Description

The invention relates to the reduction of the pollution of the vehicle exhaust gas, and among others, to urea tanks used in this view.

Legislation on vehicle and truck emissions stipulates a reduction in the release of nitrogen oxides NOx into the atmosphere. One known way to achieve this objective is to use the SCR (Selective Catalytic Reduction) process which enables the reduction of nitrogen oxides by injection of a reducing agent, generally ammonia, into the exhaust line. A urea solution is used for producing the ammonia and is stored on-board in a tank.

It is necessary to check in such tanks the level and the quality of the urea solution. Indeed, measuring the concentration of urea permits to determine if any contaminants are present. The required concentration measurement range is 0% to 40% of urea to water. Nominal concentration is 32.5%. In addition, common automotive fluids should be identified to determine if mis-filling has occurred. Typically more than 5% contamination of the total usable volume must be detected. Also, intentional tampering of the system to avoid using certified urea fluid must be detected.

Quality sensors have been developed based, for example, on ultrasound speed (acoustic resonator) in the urea liquid (see e. g. U.S. 2008/0280371). Indeed, the speed of sound in urea solution can be used to measure the concentration, since this speed changes with the molecular weight of the solution. The change in the molecular weight affects sound speed proportionately. Others quality sensors using ultrasound detection are described in GB 2 476 317 A, DE 10 2009 055716 A1 and DE 10 2007 059853 A1.

The main drawback of ultrasonic fluid quality sensors is that the gap between the sensor transducer and the reference target used for reflecting the ultrasonic wave of the sensor must be filled with fluid. Typically this gap must be at least 25 mm if an independent transducer is used. If a single transducer is measuring both tank level and fluid quality (reference measurement), the distance must be extended to at least 50 mm to get an accurate measurement and differentiate between the multiple returned sound waves.

Ideally the concentration measurement would be taken until the fluid in the tank is completely empty. However, for some applications, a 10-15 mm unmeasurable zone at the bottom of the tank is allowed, since prior technologies do require it to allow a quality measurement. That means that it is not possible to have a vertical measurement of the fluid quality when the fluid level drops below the reference target (25-50 mm), thus giving a very large unmeasurable fluid volume at the bottom of the tank. Therefore, the solution most suppliers have chosen is to have the reference measurement performed horizontally in the bottom of the tank. But this is not ideal for system cost, complexity and integration.

Accordingly, an object of the invention is to improve the measurement of the quality of the solution. Especially, an object is to measure the quality of the solution even when its level in the tank is low, without altering system cost, complexity and integration.

To this end, the invention provides a device according to claim 1.

Accordingly, even when the amount of solution in the tank is low, the chamber can be filled with the solution up to the deflector. More precisely, the measurement can go on until there is enough solution in the tank to fill the chamber up to the deflector. This is no more possible when the tank is completely empty because no solution is available for filling the chamber. Beside, such a vertical measurement is preferable in terms of cost, complexity and integration.

Preferably the inlet extends lower than the deflector.

Preferably the first chamber is open at the top of the chamber.

Thus, the solution situated in the first chamber can freely flow out of the first chamber, for example into the tank for replenishing it. And for example, the solution of the tank can flow into the first chamber if there is enough solution in the tank.

In one embodiment, the device has a wall, the first chamber being formed in a concave recess of the wall.

Accordingly, the first chamber does not make it necessary to increase the volume of the tank or to reduce its capacity.

In one embodiment, the transceiver is arranged for measuring both a level of the solution and a quality of the solution other than the level.

Thus, only one transceiver is used for both measurements.

In another embodiment, the device comprises a second ultrasonic transceiver arranged for measuring a level of the solution.

The device has means arranged for filling the first chamber with the urea solution so that the level of the solution in the first chamber reaches at least the deflector.

Advantageously, the device comprises a feed line for transferring urea solution from the device and a return line for transferring the solution from the feed line to the first chamber.

Advantageously, the device comprises a check valve located on a path of the solution to the inlet and arranged for permitting a flow of solution into the first chamber only.

Thus, the solution of the first chamber does not exit through the inlet, especially when a pump of the tank or of the feed line works in reverse mode.

The device may comprise at least one of the following organs: a heater, a pump, a filter, a valve and a temperature probe.

The invention also provides a combination of a vehicle urea tank and a device according to the invention arranged to be in flow communication with the tank.

Preferably, the first chamber extends inside the tank.

But in other embodiments, the first chamber may extend outside the tank.

Advantageously, the first chamber is open at the bottom of the first chamber to permit a flow of solution from the first chamber to the device or the tank.

Thus the solution used for the measurement can go back, for example into the tank, in order to be used for treating the exhaust gas. The opening may be formed for example by a calibrated orifice permitting only a relatively low flow rate of solution.

Preferably the first chamber has an internal bottom face having a lowest point extending higher than a lowest point of an internal bottom face of a main chamber of the device or the tank.

Accordingly, most of the solution used in the first chamber may go back, for example to the tank.

In one embodiment, the device comprises means for transferring the urea solution from the tank to a feed line located outside the tank.

Accordingly, the device can be located inside the tank and be part of a module transferring the solution to the feed line.

In another embodiment, the tank comprises means, located outside the device, for transferring the urea solution from the tank to a feed line located outside the tank.

Thus, the device can still be located inside the tank but is not part of a module of the tank transferring the solution to the feed line.

In yet another embodiment, the combination also comprises a line arranged outside the tank for receiving the urea solution from the tank, the device being located outside the tank and arranged for measuring a quality of a urea solution of the line.

This time, the device is located outside the tank and makes the measurement on a line such as the feed line.

The invention also provides a vehicle urea tank according to claim11.

Preferably, the tank has means arranged for filling the secondary chamber with the urea solution so that the level of the solution in the secondary chamber reaches at least the deflector.

Advantageously, the tank has a feed line for transferring urea solution from the tank and a return line for transferring the solution from the feed line to the secondary chamber.

The invention also provides a method according to claim 12.

Preferably, a feed line transfers a urea solution from the tank to an exhaust gas line and the filling step comprises transferring the solution by the return line from the feed line to the chamber.

Embodiments of the invention will now be described as non-limiting examples with reference to the accompanying drawings, in which:
- figure 1 is a perspective view of a device according to an embodiment of the invention;
- figures 2 to 4 are perspective views of the same device with some parts removed;
- figures 5 and 6 show alternative embodiments of the invention; and
- figure 7 is a plan view of a device according to another embodiment of the invention.

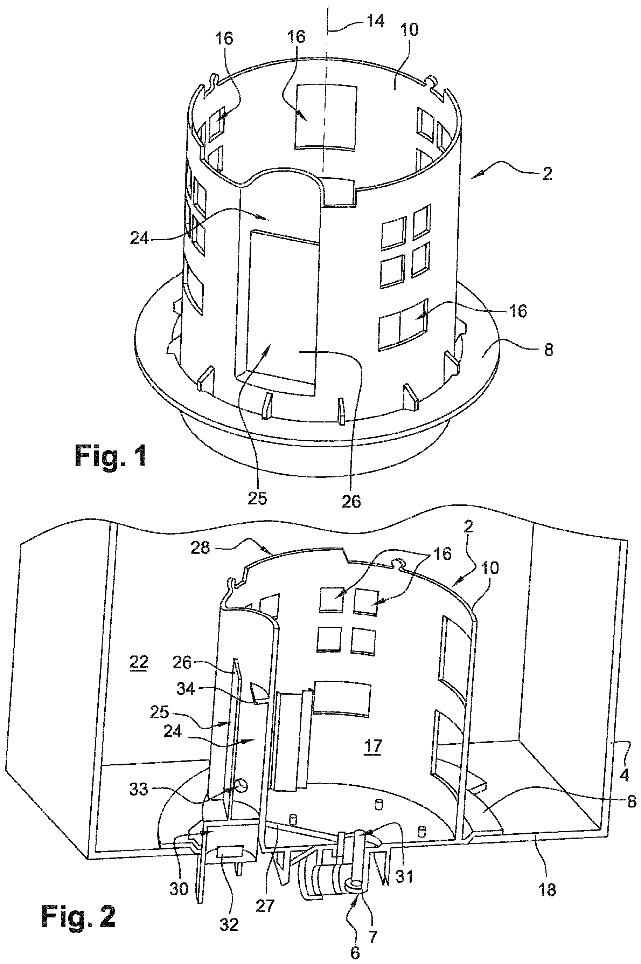

Figures 1 to 4 illustrate a device according to an embodiment of the invention. The device formed by module 2 is intended to be used in a vehicle urea tank 4. The vehicle has a diesel thermal engine producing exhaust gas that need to be treated for reducing the release of nitrogen oxides, Nox, into the atmosphere. This is achieved by the use of the SCR process with injection of urea which converts to ammonia in the exhaust line due to high exhaust gas temperature. Ammonia is used as a reducing agent in the exhaust line. The urea solution is used for producing the ammonia in a known manner which will not be explained here. The tank contains a water solution of urea such as the Adblue^{®} solution (32.5 wt% urea in water, corresponding to the specifications of the ISO 22241 standard).

Tank 4 has a main chamber 22, intended to be filled with the urea solution and in which module 2 extends.

The module has a heater for heating the solution which has not been illustrated. It comprises a non-illustrated temperature probe for sensing the temperature of the solution. The module is for example of the type disclosed in WO2007/141312.

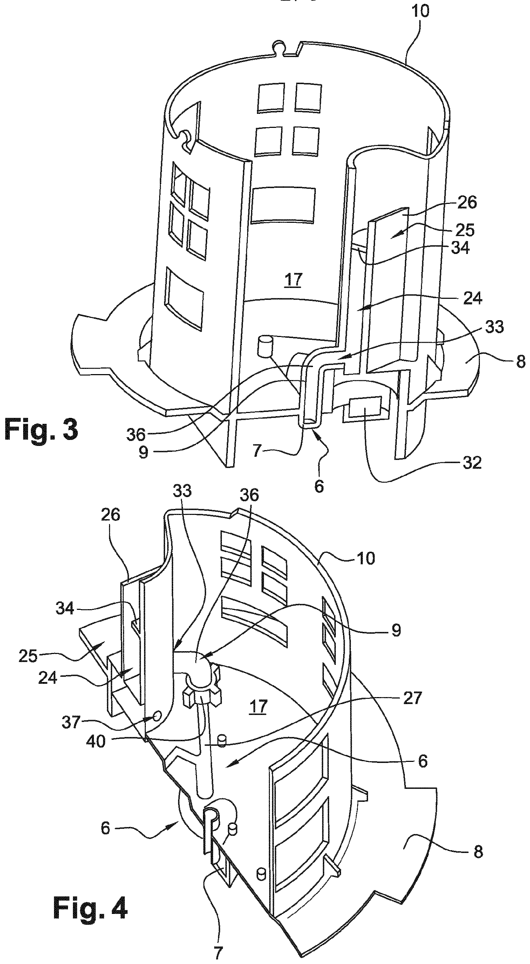

It also has means 6, illustrated on figure 4, for transferring the solution from the tank and delivering urea from the device to an injector mounted on the exhaust pipe. The base of the module has an outlet 31 forming the lowest point of the tank and through which urea is extracted from the tank by means 6. Means 6 comprise a pipe which forms the beginning or upwards part of a feed nipple connection to the delivery line for providing the urea solution in view of treating the exhaust gas. Feed line 7 comprises a pump for this transfer of solution. The vehicle also has a return line 9 having an upwards end communicating with a portion of the feed line and a downward end communicating with the device as will be explained. Indeed, sometimes, the pump intentionally meters too great an amount (flow) of liquid, the excess of which is returned to the tank, using the return line which is equipped with a calibrated valve. The module may comprise a filter for filtering the solution entering the feed line and a valve on the feed line. None of them has been illustrated.

More detailed explanations about the feed line and the return line can be found in WO 2008/155303.

The module has a base 8 having the general shape of a disc and a main cylindrical convex wall 10 having a generally circular section in a plane perpendicular to axis 14 which is common to the base and the wall. This axis is intended to be vertical. The base forms a bottom for the module. The wall has openings 16 for allowing the solution to flow from the tank main chamber inside the chamber 17 formed by wall 10 and outside from it back to main chamber 22.

The module is received in a circular opening formed in bottom 18 of the tank so that the base is contiguous to this bottom.

Wall 10 locally has a cylindrical recess showing a concave curved section in a plane perpendicular to axis 14. The recess receives a vertical planar rectangular divider 26 which is parallel to axis 14. The plane of the divider is perpendicular to the direction radial to the axis. The divider extends from base 8 and is interrupted before reaching top edge 28 of wall 10. For example, the divider covers 75% of the height of wall 10.

The divider divides the recess in two distinct chambers 24, 25, chamber 25 extending between axis 14 and chamber 24. Chamber 24 is formed by wall 10 and divider 26 and is open only at the top. Chamber 25 is formed by the divider and wall 10 but is open on its side facing the tank and opposed to the divider. Both chambers have a cylindrical form. Of course other configurations could be given to chambers 24, 25.

Base 8 comprises a housing 30 for at least one ultrasonic transceiver 32. In this example, the module has a single transceiver. The housing is formed by the bottom of chambers 24, 25 so that the housing and the transceiver are aligned with the chambers. The transceiver is arranged for emitting a ultrasonic wave vertically in a direction parallel to axis 14, so that the wave goes through the bottom and along the height of both chambers. The module has control means for controlling the module and especially the transceiver which have not been illustrated.

The module comprises a deflector 34 in the form of a rigid planar plate protruding from the external face of wall 10 into chamber 24 toward the divider and extending in a plane which is perpendicular to axis 14. Deflector 34 does not contact divider 26 so that a gap exists between them. Beside, deflector 34 is located at a level which is lower than the top of divider 26. The deflector may need to extend down to the base of the chamber to prevent damage from ice expansion during frozen conditions.

Return line 9 comprises for example a pipe 36 having an end which communicates with an inlet opening 33 formed in wall 10 near the bottom of chamber 24. Nevertheless, the pipe could have any other form of sealed fluid communication path. This inlet is located lower than the deflector. Means 6 are arranged for pumping urea solution into chamber 24 through this inlet so that the level of solution in this chamber reaches the deflector and preferably goes above.

The module works as follows.

Feed line 7 periodically take urea solution from the tank through outlet 31 and inject it into the means for treating the exhaust gas, for producing ammonia which is injected into the exhaust gas line.

Return line 9 pumps urea solution from the feed line through pipe 36 and into chamber 24 so that the level of the solution in this chamber goes up and reaches the level of deflector 34. More precisely, the chamber filling port receives fluid from the return port 27 (which is the internal passage from the feed nipple to check valve 40) and delivers it to the chamber through the chamber filling port.

Thus, in chamber 24, fluid is retained provisionally with a level situated above the height of the deflector.

Transceiver 32 sends a ultrasonic wave vertically into chambers 24 and 25 which both form sensing chambers.

Chamber 24 is filled with solution up to a level situated above the deflector. The deflector forms a reference target. In this chamber, the wave is reflected down by the deflector, vertically to the transceiver which receives it. The control means can then determine a quality of the solution, other than the level of the solution, such as a concentration of the solution in urea, in a manner known in itself. Indeed, the deflector provides a known distance for making a reference measurement.

In chamber 25, the wave is reflected down by the surface of the solution in contact with air, vertically to the transceiver which receives it. The control means can then determine a level of the solution in chamber 25, that is to say the height of the solution column in chamber 25. Indeed, the transducer measures the sound waves total time of flight which is dependent on the physical properties (density) of the fluid. The total time of flight is used to infer fluid level. As this chamber is open on the tank on one side, the level of solution in the tank can then also be determined.

In this embodiment, a single transceiver is used for both the level and quality measurement by measuring two separate return sound waves from a single supplied wave: First a return sound wave from the fluid to air interface at the top of chamber 25 which indicates fluid level and a second return sound wave from the deflector at the top of chamber 24 which indicates fluid quality. But it is possible to have separate transducers for these respective measurements (level and quality) if required. Indeed, in a less optimized variant, another ultrasound quality sensor can be fitted under the sensing reservoirs, separately from the tank level sensor. This is not the preferred solution, but it could make sense in some particular cases.

Accordingly, the invention uses the already available fluid return circuit to ensure that fluid is present for making a vertical reference measurement. The invention uses walls of the module to create a sensing reservoir 24 which will trap and contain fluid. The return fluid circuit of the delivery module is plumbed into the bottom of sensing reservoir 24, which will allow the reservoir to remain full until all of the fluid in the tank has been depleted (delivered to the injector). The invention allows for a quality measurement even if the tank level is below the reference target.

As the measurements are done vertically in the fluid tank, this minimizes the required packaging space on the bottom of the storage tank.

This solution improves accuracy at a lower cost compared to prior art. Indeed, stand alone ultrasonic sensors could be hot plate welded to the bottom of the storage tank and require a through hole. Also, the invention gives a precise measurement of the fluid which is going to be delivered to the engine. Other quality sensors take measurements away from the fluid pick-up point in the delivery module and may not precisely determine the quality of the fluid being delivered. The invention lowers cost and improves robustness of the system.

The invention also works in every temperature conditions, even in winter or freezing conditions. The only limit is that the feed pump must be operating and the return circuit must be flooded with the heated solution.

The top of chamber 24 is open so that the fluid is able to flow upwards and exit out of the top thus replenishing the fluid in the reservoir, for example approximately every 1-2 minutes. Sensing chamber 24 is full at all times while the pump is in operation.

The module could be made of thermoplastic. The divider could be molded directly into the flange formed by base 8 or could be combined with the deflector and assembled to the flange after molding. Preferably, the deflector is made of stainless-steel. It could be made of plastic and molded in or attached to the side wall of the module. It could also be attached to the divider.

It is possible to add a small controlled leak at the bottom of chamber 24, for example in the form of a small outlet 37 in wall 10, as shown on figure 4, which will allow the fluid to drain down into module chamber 17 after the pump and the return flow is stopped. This is advantageous when chamber 24 has an internal bottom face having a lowest point extending higher than the lowest point 31 of the internal bottom face of the main chamber of the module. Thus the lowest position for the solution in the main chamber is below its lower position in chamber 24.

Preferably, a check valve 40 is provided on the path of the solution from the return line to chamber 24 and arranged for permitting a flow of the solution from these means to the chamber only, no flow being possible in the other direction. Thus the fluid enters into the sensing reservoir formed by chamber 24 after it passed the check valve. The check valve prevents the sensing reservoir from draining when the pump is run in reverse mode, for example during system purge.

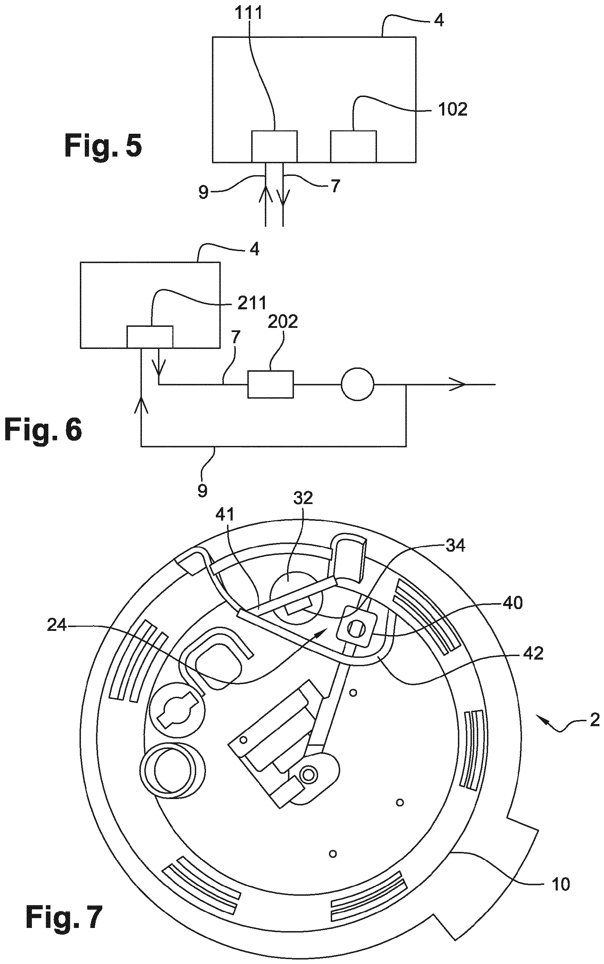

In another embodiment illustrated on figure 5, device 102 according to the invention (and having the measuring chamber and the deflector for making the measurements about the urea solution) is distinct and distant from a module or device 111 making the transfer of urea solution from the tank to feed line 7 and receiving the urea solution from return line 9 and the check valve 40. Module 111 may comprise a heater, a pump, a filter, a valve and a temperature probe whereas measurement device 102 may comprise none of these, its only function being in that case to make the above-mentioned measurements. One advantage is that device 102 and module 111 may be separately fabricated and assembled to the tank. In that case too, device 102 may extend at least partially outside the tank, contrary to module 111.

In another alternative embodiment, the sensing reservoir formed by chamber 24 could be part of feed line 7 and be distant from wall 10 and from the tank. This version would be interesting to systems that do not have a return line. An example of this is illustrated on figure 6. This embodiment has all the features of the embodiment of figure 5 except that the measuring device 202 is located outside tank 4 and at a distance from it. It is situated on feed line 7 so that the measurements are performed with urea solution of the feed line. This urea solution has been previously transferred from the tank into the feed line by module 211 located inside the tank. In a variant, measuring device 202 could be located on return line 9.

Figure 7 shows a top view of an alternative construction of the module where check valve 40 is directly connected to the sensing reservoir. This eliminates the need for the fluid return channel. This time, the quality measurement chamber 24 is located directly around the exit of the check valve 40 (return orifice). This chamber has two walls. The first wall 41 is planar and makes a separation between the inside of module 2 and the rest of the tank. The other wall 42 in curved and separates the chamber from the inside of module 2.

The ultrasonic transducer 32 is situated partly below chamber 24 and partly below the outside of the module, outside chamber 24. The deflector 34 is mounted on the wall 41 which divides the quality measurement chamber from the tank open area. The deflector extends into the chamber. It could possibly be located on an alternate wall inside of the quality measurement chamber. Here, the quality measurement chamber is relocated to be directly around the check valve as opposed to the previous location.

Accordingly, the transducer is arranged so that one echo would reflect off of the fluid/air interface for measuring fluid level and a second echo would reflect off of the deflector to determine fluid type.

Alternatively, we could have two separate ultrasonic transducers (1-quality chamber, 1-area open to tank)

Naturally, numerous modifications may be applied to the invention.

The measuring chamber could have different shapes provided it is arranged to contain fluid up to a quality reference height even if the fluid level in the tank falls below.

## Claims

1. A device (2; 102; 202) for measuring a quality of a urea solution of a vehicle urea tank or of a urea solution coming from such a tank, the device having:
- a first chamber (24),
- a vertical divider (26),
- a second chamber (25) divided from the first chamber (24) by the vertical divider (26),
- at least one ultrasonic transceiver (32) arranged for vertically emitting an ultrasonic wave in the two chambers (24, 25),
- a deflector (34) extending in the first chamber (24) above the transceiver (32),
- means (9) arranged for filling the first chamber (24) with the urea solution, the first chamber (24) having an inlet (33) connected to the means for filling the chamber with a urea solution so that a level of the solution in the first chamber (24) reaches at least the deflector (34),
- control means,
wherein
the transceiver (32) is further arranged to receive the down reflection of the ultrasonic wave emitted in the second chamber (25) from the surface of the solution in contact with air, and to receive the down reflection of the ultrasonic wave emitted in the first chamber (24) from the deflector (34), and
wherein the control means are arranged to determine a level of the solution from the received reflection signal in the second chamber (25) and to determine a quality of the solution, other than the level of the solution, from the received reflection in the first chamber (24).

2. A device (2; 102; 202) according to the preceding claim in which the first chamber (24) is open at the top of the chamber.

3. A device (2; 102; 202) according to any of the preceding claims, having a wall (10), the first chamber (24) being formed in a concave recess of the wall.

4. A device according to any of claims 1 to 3, comprising a second ultrasonic transceiver arranged for measuring a level of the solution.

5. A device (2) according to any of the preceding claims comprising a feed line (7) for transferring urea solution from the device and a return line (9) for transferring the solution from the feed line to the first chamber (24).

6. A device (2; 102; 202) according to any of the preceding claims, comprising a check valve (40) located on a path of the solution to the inlet and arranged for permitting a flow of solution into the first chamber (24) only.

7. A device (2; 102; 202) according to any of the preceding claims comprising at least one of the following organs: a heater, a pump, a filter, a valve and a temperature probe.

8. A combination of a vehicle urea tank (4) and a device (2; 102; 202) according to any of the preceding claims, the device being arranged to be in flow communication with the tank.

9. A combination according to the preceding claim in which the first chamber (24) extends inside the tank.

10. A combination according to any of claims 8 to 9 in which the first chamber (24) is open at the bottom of the chamber to permit a flow of solution from the chamber to the device or the tank.

11. A vehicle urea tank (4) having:
- a main chamber (22),
- a device (2; 102; 202) according to claims 1 to 7, and
the first chamber (24) of the device (2; 102; 202) having an internal bottom face having a lowest point extending higher than a lowest point (31) of the internal bottom face of the main chamber (22) of the module and a small controlled leak at its bottom so that the level of the urea solution in the first chamber (24) can be higher than a level of the solution in the main chamber.

12. A method for measuring a quality of a urea solution in a vehicle urea tank (4) or of a solution coming from such a tank, comprising the steps of:
- filling a first chamber (24) by a return line (9), through an inlet (33) of the first chamber (24), with a urea solution coming from the tank so that a level of the solution in the first chamber (24) reaches at least a deflector (34) extending in the first chamber (24),
- providing a second chamber (25) divided from the first chamber (24) by a vertical divider (26), and
- sending by at least one ultrasonic transceiver (32) an ultrasonic wave vertically in both the chambers (24, 25) so as to measure a level of the solution by the received down reflection of the ultrasonic wave emitted in the second chamber (25) from the surface of the solution in contact with air, and to measure a quality of the solution other than the level by the received down reflection of the ultrasonic wave emitted in the first chamber (24) from the deflector (34).

13. The method of the preceding claim in which a feed line (7) transfers a urea solution from the tank to an exhaust gas line and the filling step comprises transferring the solution by the return line (9) from the feed line to the first chamber (24).

## Patentansprüche

1. Vorrichtung (2; 102; 202) zum Messen der Qualität einer Harnstofflösung eines Fahrzeug-Harnstofftanks oder einer Harnstofflösung, die aus einem solchen Tank kommt, wobei die Vorrichtung Folgendes aufweist:
- eine erste Kammer (24),
- eine vertikale Trennwand (26),
- eine zweite Kammer (25), die von der ersten Kammer (24) durch die vertikalen Trennwand (26) getrennt ist,
- mindestens einen Ultraschall-Sender-Empfänger (32), der so angeordnet ist, dass er eine Ultraschallwelle vertikal in die beiden Kammern (24, 25) abstrahlt,
- eine Ablenkeinrichtung (34), der sich in der ersten Kammer (24) oberhalb des Sender-Empfängers (32) erstreckt,
- Mittel (9) zum Füllen der ersten Kammer (24) mit der Harnstofflösung, wobei die erste Kammer (24) einen Einlass (33) aufweist, der mit den Mitteln zum Füllen der Kammer mit einer Harnstofflösung verbunden ist, so dass ein Füllstand der Lösung in der ersten Kammer (24) zumindest die Ablenkeinrichtung (34) erreicht,
- Steuermittel,
wobei
der Sender-Empfänger (32) ferner so angeordnet ist, dass er die Abwärtsreflexion der in der zweiten Kammer (25) ausgesandten Ultraschallwelle von der Oberfläche der Lösung in Kontakt mit der Luft empfängt, und dass er die Abwärtsreflexion der in der ersten Kammer (24) ausgesandten Ultraschallwelle von der Ablenkeinrichtung (34) empfängt, und
wobei die Steuermittel so angeordnet sind, dass sie aus der empfangenen Reflexion in der zweiten Kammer (25) einen Füllstand der Lösung bestimmen und aus der empfangenen Reflexion in der ersten Kammer (24) eine Qualität der Lösung bestimmen, die nicht der Füllstand der Lösung ist.

2. Vorrichtung (2; 102; 202) nach dem vorhergehenden Anspruch, bei der die erste Kammer (24) an der Oberseite der Kammer offen ist.

3. Vorrichtung (2; 102; 202) nach einem der vorhergehenden Ansprüche, mit einer Wand (10), wobei die erste Kammer (24) in einer konkaven Ausnehmung der Wand ausgebildet ist.

4. Vorrichtung nach einem der Ansprüche 1 bis 3, aufweisend einen zweiten Ultraschall-Sender-Empfänger, der zur Messung des Füllstands der Lösung eingerichtet ist.

5. Vorrichtung (2) nach einem der vorhergehenden Ansprüche, aufweisend eine Zuführungsleitung (7) zum Überführen von Harnstofflösung aus der Vorrichtung und eine Rückführleitung (9) zum Überführen der Lösung aus der Zuführungsleitung in die erste Kammer (24).

6. Vorrichtung (2; 102; 202) nach einem der vorhergehenden Ansprüche, aufweisend ein Rückschlagventil (40), das auf einem Weg der Lösung zum Einlass angeordnet ist und so beschaffen ist, dass es einen Lösungsfluss nur in die erste Kammer (24) zulässt.

7. Vorrichtung (2; 102; 202) nach einem der vorhergehenden Ansprüche, die mindestens eines der folgenden Einrichtungen aufweist: eine Heizung, eine Pumpe, einen Filter, ein Ventil und einen Temperaturfühler.

8. Kombination aus einem Fahrzeug-Harnstofftank (4) und einer Vorrichtung (2; 102; 202) nach einem der vorhergehenden Ansprüche, wobei die Vorrichtung so angeordnet ist, dass sie in Fließverbindung mit dem Tank steht.

9. Kombination nach dem vorhergehenden Anspruch, bei der sich die erste Kammer (24) in das Innere des Tanks erstreckt.

10. Kombination nach einem der Ansprüche 8 bis 9, bei der die erste Kammer (24) am Boden der Kammer offen ist, um einen Lösungsfluss aus der Kammer zu der Vorrichtung oder dem Tank zu ermöglichen.

11. Ein Fahrzeug-Harnstofftank (4) mit:
- einer Hauptkammer (22),
- einer Vorrichtung (2; 102; 202) nach einem der Ansprüche 1 bis 7, und
wobei die erste Kammer (24) der Vorrichtung (2; 102; 202) eine innere Bodenfläche mit einem niedrigsten Punkt, der sich höher als ein niedrigster Punkt (31) der inneren Bodenfläche der Hauptkammer (22) des Moduls erstreckt, und ein kleines kontrolliertes Leck an ihrem Boden aufweist, so dass der Füllstand der Harnstofflösung in der ersten Kammer (24) höher sein kann als ein Füllstand der Lösung in der Hauptkammer.

12. Verfahren zum Messen der Qualität einer Harnstofflösung in einem Fahrzeug-Harnstofftank (4) oder einer aus einem solchen Tank kommenden Lösung, das die folgenden Schritte umfasst:
- Füllen einer ersten Kammer (24) durch eine Rückführleitung (9) über einen Einlass (33) der ersten Kammer (24) mit einer aus dem Tank kommenden Harnstofflösung, so dass ein Füllstand der Lösung in der ersten Kammer (24) mindestens eine sich in der ersten Kammer (24) erstreckende Ablenkeinrichtung (34) erreicht,
- Bereitstellen einer zweiten Kammer (25), die von der ersten Kammer (24) durch eine vertikale Trennwand (26) getrennt ist, und
- Senden einer Ultraschallwelle durch mindestens einen Ultraschall-Sender-Empfänger (32) vertikal in die beiden Kammern (24, 25), um einen Füllstand der Lösung durch die empfangene Abwärtsreflexion der in der zweiten Kammer (25) ausgesandten Ultraschallwelle von der Oberfläche der Lösung in Kontakt mit der Luft zu messen, und um eine andere Qualität der Lösung als den Füllstand durch die empfangene Abwärtsreflexion der in der ersten Kammer (24) ausgesandten Ultraschallwelle von der Ablenkeinrichtung (34) zu messen.

13. Verfahren nach dem vorhergehenden Anspruch, bei dem eine Zuführungsleitung (7) eine Harnstofflösung aus dem Tank in eine Abgasleitung überführt und der Befüllungsschritt das Überführen der Lösung durch die Rückführleitung (9) von der Zuführungsleitung in die erste Kammer (24) umfasst.

## Revendications

1. Dispositif (2 ; 102 ; 202) pour mesurer la qualité d'une solution d'urée d'un réservoir d'urée de véhicule ou d'une solution d'urée provenant d'un tel réservoir, le dispositif ayant :
- une première chambre (24),
- un séparateur vertical (26),
- une seconde chambre (25) séparée de la première chambre (24) par le séparateur vertical (26),
- au moins un émetteur-récepteur ultrasonore (32) configuré pour émettre verticalement une onde ultrasonore dans les deux chambres (24, 25),
- un déflecteur (34) s'étendant dans la première chambre (24) au-dessus de l'émetteur-récepteur (32),
- des moyens (9) configurés pour remplir la première chambre (24) avec la solution d'urée, la première chambre (24) ayant une entrée (33) reliée aux moyens pour remplir la chambre avec une solution d'urée de telle sorte qu'un niveau de la solution dans la première chambre (24) atteigne au moins le déflecteur (34),
- des moyens de commande,
dans lequel l'émetteur-récepteur (32) est en outre configuré pour recevoir la réflexion vers le bas de l'onde ultrasonore émise dans la seconde chambre (25) par la surface de la solution en contact avec l'air, et pour recevoir la réflexion vers le bas de l'onde ultrasonore émise dans la première chambre (24) par le déflecteur (34), et
dans lequel les moyens de commande sont configurés pour déterminer un niveau de la solution à partir du signal de réflexion reçu dans la seconde chambre (25) et pour déterminer une qualité de la solution, autre que le niveau de la solution, à partir de la réflexion reçue dans la première chambre (24).

2. Dispositif (2 ; 102 ; 202) selon la revendication précédente dans lequel la première chambre (24) est ouverte au sommet de la chambre.

3. Dispositif (2 ; 102 ; 202) selon l'une quelconque des revendications précédentes, ayant une paroi (10), la première chambre (24) étant formée dans un renfoncement concave de la paroi.

4. Dispositif selon l'une quelconque des revendications 1 à 3, comprenant un second émetteur-récepteur à ultrasons configuré pour mesurer un niveau de la solution.

5. Dispositif (2) selon l'une quelconque des revendications précédentes, comprenant une ligne d'alimentation (7) pour le transfert de la solution d'urée du dispositif et une ligne de retour (9) pour le transfert de la solution de la ligne d'alimentation vers la première chambre (24).

6. Dispositif (2 ; 102 ; 202) selon l'une quelconque des revendications précédentes, comprenant un clapet anti-retour (40) situé sur un passage de la solution à l'entrée et configuré de manière à permettre un écoulement de solution dans la première chambre (24) uniquement.

7. Dispositif (2 ; 102 ; 202) selon l'une des revendications précédentes comprenant au moins un des organes suivants : un chauffeur, une pompe, un filtre, une vanne et une sonde de température.

8. Combinaison d'un réservoir d'urée de véhicule (4) et d'un dispositif (2 ; 102 ; 202) selon l'une quelconque des revendications précédentes, le dispositif étant disposé pour être en communication fluidique avec le réservoir.

9. Combinaison selon la revendication précédente dans laquelle la première chambre (24) s'étend à l'intérieur du réservoir.

10. Combinaison selon l'une quelconque des revendications 8 à 9 dans laquelle la première chambre (24) est ouverte au fond de la chambre pour permettre un écoulement de solution de la chambre vers le dispositif ou le réservoir.

11. Réservoir d'urée pour véhicule (4) ayant :
- une chambre principale (22),
- un dispositif (2 ; 102 ; 202) selon les revendications 1 à 7, et
la première chambre (24) du dispositif (2; 102; 202) ayant une face inférieure interne ayant un point le plus bas s'étendant au-dessus d'un point le plus bas (31) de la face inférieure interne de la chambre principale (22) du module et une petite fuite contrôlée à son fond de sorte que le niveau de la solution d'urée dans la première chambre (24) puisse être supérieur à un niveau de la solution dans la chambre principale.

12. Procédé de mesure de la qualité d'une solution d'urée dans un réservoir d'urée de véhicule (4) ou d'une solution provenant d'un tel réservoir, comprenant les étapes consistant à :
- remplir une première chambre (24) par une ligne de retour (9), par une entrée (33) de la première chambre (24), avec une solution d'urée provenant du réservoir de telle sorte qu'un niveau de la solution dans la première chambre (24) atteigne au moins un déflecteur (34) s'étendant dans la première chambre (24),
- prévoir une seconde chambre (25) séparée de la première chambre (24) par un séparateur vertical (26), et
- envoyer, par au moins un émetteur-récepteur ultrasonore (32), une onde ultrasonore verticalement dans les deux chambres (24, 25) de manière à mesurer un niveau de la solution par la réflexion reçue vers le bas de l'onde ultrasonore émise dans la seconde chambre (25) par la surface de la solution en contact avec l'air, et à mesurer une qualité de la solution autre que le niveau par la réflexion reçue vers le bas de l'onde ultrasonore émise dans la première chambre (24) par le déflecteur (34).

13. Procédé selon la revendication précédente dans lequel une ligne d'alimentation (7) transfère une solution d'urée du réservoir à une ligne de gaz d'échappement et l'étape de remplissage consiste à transférer la solution par la ligne de retour (9) de la ligne d'alimentation vers la première chambre (24).
